# EUROPÄISCHE PATENTSCHRIFT

(11) **EP 3 921 181 B1**
(45) Veröffentlichungstag und Bekanntmachung des Hinweises auf die Patenterteilung: **22.11.2023**
(21) Anmeldenummer: 20704204.5
(22) Anmeldetag: 30.01.2020
(51) Int. Cl.: B60B 3/14, B60B 3/16, B60B 27/00

(54) **SPURVERBREITERUNGSSCHEIBE FÜR KRAFTFAHRZEUGE**
WHEEL SPACER DISC FOR MOTOR VEHICLES
DISQUE ÉLARGISSEUR DE VOIE POUR VÉHICULES À MOTEUR

(30) Priorität: 08.02.2019 DE 202019100728 U
(43) Veröffentlichungstag der Anmeldung: 15.12.2021
(73) Patentinhaber: Wohlfarth, Klaus, 74427 Fichtenberg (DE)
(72) Erfinder: SIMONJAN, Edgar, 74541 Vellberg (DE)
(74) Vertreter: Patentanwälte Ruff, Wilhelm, Beier, Dauster & Partner mbB
(86) Internationale Anmeldenummer: PCT/EP2020/052257
(87) Internationale Veröffentlichungsnummer: WO 2020/160992

(56) Entgegenhaltungen:
- DE-A1- 3 017 116
- DE-A1- 3 442 443
- DE-C1- 4 312 438
- DE-C2- 3 442 443
- DE-U1- 20 205 052
- US-A1- 2006 186 727

## Beschreibung

Die Erfindung betrifft eine Anordnung mit einer Radnabe, einer Spurverbreiterungsscheibe und einer Felge für Kraftfahrzeuge. Die Erfindung betrifft auch eine weitere Anordnung mit einer Radnabe, einer Spurverbreiterungsscheibe und einer Felge für Kraftfahrzeuge.

Die US-Offenlegungsschrift US 2006/0186727 A1 zeigt ein Radbefestigungssystem mit einer Felge, einem Felgenstern, der an der Felge befestigt wird, einer Spurverbreiterungsscheibe, die wiederum an dem Felgenstern befestigt wird, und einer Radnabe mit Stehbolzen, an der die Spurverbreiterungsscheibe befestigt wird. Die Spurverbreiterungsscheibe dient somit als Adapter, um ein und denselben Felgenstern an Radnaben mit unterschiedlichen Stehbolzenkreisen zu befestigen. Die Spurverbreiterungsscheibe weist erste Stufenöffnungen auf, wobei in die ersten Stufenöffnungen eine Mutter eingesetzt wird, in die dann eine Schraube eingeschraubt wird, um den Felgenstern an der Spurverbreiterungsscheibe zu befestigen. Die Spurverbreiterungsscheibe weist zweite Stufenöffnungen auf, durch die die Stehbolzen der Radnabe hindurchragen und in die dann abschnittsweise konventionelle Radmuttern hineinragen, wenn sie auf die Stehbolzen der Radnabe aufgeschraubt sind.

Aus der deutschen Patentschrift DE 43 12 438 C1 ist ein Set für die Verbreiterung der Spur eines Kraftfahrzeugs bekannt. Das Set weist eine Spurverbreiterungsscheibe auf, die als Adapter vorgesehen ist, um ein und dieselbe Felge an Radnaben mit unterschiedlichen Lochkreisen zu befestigen. An einer Radnabe mit einem ersten Lochkreis wird die Felge so befestigt, dass die Felge mittels Radbolzen, die Stufenöffnungen in der Spurverbreiterungsscheibe durchdringen, unmittelbar in den Gewindebohrungen der Radnabe befestigt wird. An einer Radnabe mit einem anderen Lochkreis wird die Felge dadurch befestigt, dass in zweite Stufenöffnungen der Spurverbreiterungsscheibe Gewindebolzen eingepresst werden. Die Spurverbreiterungsscheibe wird dann zunächst mittels kurzen Radschrauben, die die ersten Stufenöffnungen durchsetzen, an der Radnabe befestigt. Dann wird die Felge mittels Muttern an den Gewindebolzen der Spurverbreiterungsscheibe befestigt.

Aus der deutschen Offenlegungsschrift DE 30 17 116 A1 ist eine Spurverbreiterungsscheibe für Kraftfahrzeuge bekannt, die einerseits mittels erster Schrauben mit einer Radnabe und andererseits mittels zweiter Schrauben mit einer Felge verbunden ist.

Aus der deutschen Offenlegungsschrift DE 34 42 443 A1 ist ein Fahrzeugrad, insbesondere ein Reserverad, bekannt, bei dem in der Radscheibe teils zylindrische Bolzenlöcher und teils Langlöcher angebracht sind. Damit soll das Fahrzeugrad für unterschiedliche Lochkreise beziehungsweise Bolzenkreise von Radnaben eingesetzt werden können.

Aus der deutschen Gebrauchsmusterschrift DE 202 05 052 U1 ist eine Adapterplatte oder Spurverbreiterungsscheibe für Kraftfahrzeuge bekannt. Die Spurverbreiterungsscheibe hat erste Öffnungen, durch die Radschrauben hindurchgesteckt werden und dann in Gewindebohrungen der Radnabe eingeschraubt werden. Dadurch kann die Spurverbreiterungsscheibe an der Radnabe befestigt werden. Die Spurverbreiterungsscheibe weist weiter Gewindebohrungen auf, um eine Felge mittels weiterer Radschrauben an der Spurverbreiterungsscheibe zu befestigen.

### AUFGABE UND LÖSUNG

Der Erfindung liegt die Aufgabe zugrunde, eine Anordnung mit einer Spurverbreiterungsscheibe hinsichtlich einer Montagefähigkeit einer Felge auf der Spurverbreiterungsscheibe sowie der Felge samt der Spurverbreiterungsscheibe auf einer Radnabe zu verbessern.

Zur Lösung der Aufgabe ist erfindungsgemäß eine Anordnung mit einer Radnabe, einer Spurverbreiterungsscheiben und einer Felge für Kraftfahrzeuge mit den Merkmalen von Anspruch 1 und eine weitere Anordnung mit der Radnabe, der Spurverbreiterungsscheibe für Kraftfahrzeuge und der Felge nach Anspruch 11 vorgesehen. Weiterbildungen sind in den Unteransprüchen 2 bis 10 sowie 12 bis 13 angegeben.

Gemäß der Erfindung ist eine Anordnung mit einer Spurverbreiterungsscheibe für Kraftfahrzeuge mit mehreren Radschraubenöffnungen, mit einem Felgenzentrierelement zum Zentrieren einer Felge relativ zu der Spurverbreiterungsscheibe und mit einem Radnabenzentrierelement zum Zentrieren der Spurverbreiterungsscheibe relativ zu einer Radnabe, vorgesehen, wobei die mehreren Radschraubenöffnungen jeweils als Stufenöffnungen zur jeweils abschnittsweisen Aufnahme von Schaftmuttern ausgebildet sind, wobei ein Abschnitt der Stufenöffnungen mit einem größeren Durchmesser auf einer Seite der Spurverbreiterungsscheibe angeordnet ist, auf der das Felgenzentrierelement angeordnet ist.

Eine Spurverbreiterungsscheibe, auch Distanzscheibe genannt, ist im Sinne der Erfindung eine Scheibe, die dazu dient, eine Spurverbreiterung an einem Kraftfahrzeug und somit eine Vergrößerung einer Spurweite des Kraftfahrzeugs zu erreichen. Die Spurverbreiterungsscheibe kann unterschiedliche Ausgestaltungen aufweisen. Besonders vorteilhaft ist eine Ausgestaltung der Spurverbreiterungsscheibe in Ringform, wobei Elemente der Spurverbreiterungsscheibe möglichst symmetrisch um eine Mittellängsachse der Spurverbreiterungsscheibe angeordnet sind. Eine symmetrische Ausgestaltung der Spurverbreiterungsscheibe ist besonders vorteilhaft in Hinblick auf eine Massenverteilung um eine Drehachse, die im Idealfall der Mittellängsachse der Spurverbreiterungsscheibe entspricht, um eine mögliche Unwucht während eines Drehens der Spurverbreiterungsscheibe zu vermeiden.

In einer bevorzugten Ausführungsform weist die Spurverbreiterungsscheibe eine Mittelöffnung auf. Die Mittelöffnung ist als eine Ausnehmung zu verstehen, die sich entlang der Mittellängsachse der Spurverbreiterungsscheibe durch die Spurverbreiterungsscheibe hindurch erstreckt und ein Zentrierelement der Radnabe zumindest abschnittsweise dadurch aufnehmen kann, dass das Zentrierelement der Radnabe in die Mittelöffnung hineinragt oder durch die Mittelöffnung hindurchragt. Die Mittelöffnung ist besonders vorteilhaft zentrisch auf der Spurverbreiterungsscheibe angeordnet. Weiter weist die Mittelöffnung eine umlaufende Wandung auf, die entlang der Mittellängsachse der Spurverbreiterungsscheibe eine Höhe aufweist, die wiederum einer Dicke der Spurverbreiterungsscheibe entspricht. In einer Ausgestaltung kann die Spurverbreiterungsscheibe eine mittig auf der Spurverbreiterungsscheibe angeordnete Ausformung oder Ausnehmung aufweisen, die sich entlang einer Mittellängsachse der Spurverbreiterungsscheibe erstrecken kann. Dabei kann auf einer Innenseite der Ausformung das Radnabenzentrierelement zum Zentrieren der Spurverbreiterungsscheibe relativ zu der Radnabe angeordnet sein und auf einer Außenseite der Ausformung das Felgenzentrierelement zum Zentrieren der Felge relativ zu der Spurverbreiterungsscheibe.

Die Spurverbreiterungsscheibe für Kraftfahrzeuge weist weiter die mehreren Radschraubenöffnungen auf, insbesondere fünf Radschraubenöffnungen, die als Stufenöffnungen ausgeführt sind. Insbesondere weist die Spurverbreiterungsscheibe keine weiteren, nicht als Stufenöffnung ausgebildete Radschraubenöffnungen oder Öffnungen zum Einsetzen von Bolzen und dergleichen auf, so dass aber alle Radschraubenöffnungen als Stufenöffnungen zur abschnittsweisen Aufnahme von Schaftmuttern ausgebildet sind. Die Stufenöffnungen dienen der zumindest abschnittsweisen Aufnahme von Schaftmuttern. Dabei weisen die Stufenöffnungen einerseits den größeren Durchmesser zur Aufnahme der Schaftmuttern auf sowie andererseits einen kleineren Durchmesser zur Aufnahme von Stehbolzen der Radnabe. Dabei ist der Abschnitt der Stufenöffnungen mit dem größeren Durchmesser auf der Seite der Spurverbreiterungsscheibe angeordnet, auf der auch das Felgenzentrierelement zum Zentrieren der Felge relativ zu der Spurverbreiterungsscheibe angeordnet ist und der Abschnitt der Stufenöffnungen mit dem kleineren Durchmesser ist auf der dem Felgenzentrierelement abgewandten Seite der Spurverbreiterungsscheibe angeordnet. Damit der Abschnitt der Stufenöffnungen mit dem größeren Durchmesser die Schaftmuttern zumindest abschnittsweise aufnehmen kann, weist der größere Durchmesser zumindest einen Durchmesser auf, der gleich oder größer dem Durchmesser eines Schafts der Schaftmuttern ausgebildet ist.

In Weiterbildung der Erfindung kann vorgesehen sein, dass die Spurverbreiterungsscheibe eine Dicke entlang einer Mittellängsachse der Spurverbreiterungsscheibe aufweist, die kleiner als 15 mm, insbesondere 2 mm, insbesondere 3 mm, 5 mm, 8 mm oder 10 mm, insbesondere zwischen 2 mm und 15 mm, ist.

In Weiterbildung der Erfindung kann vorgesehen sein, dass ein Abschnitt der Stufenöffnungen mit einem kleineren Durchmesser eine Dicke entlang der Mittellängsachse der Spurverbreiterungsscheibe aufweist, die zwischen 2 mm und 5 mm liegt.

Der Abschnitt der Stufenöffnungen mit dem kleineren Durchmesser ist dabei so ausgestaltet, dass er stabil genug ausgelegt ist, um die Spurverbreiterungsscheibe für Kraftfahrzeuge auf mehreren Stehbolzen der Radnabe ausreichend exakt zu Zentrieren als auch eine Dicke entlang der Mittellängsachse der Spurverbreiterungsscheibe nicht überschreitet, die die jeweils abschnittsweise Aufnahme der Schaftmuttern bei einem Einschraubprozess behindern könnte. Besonders vorteilhaft weist der Abschnitt der Stufenöffnungen mit dem kleineren Durchmesser eine Dicke entlang der Mittellängsachse der Spurverbreiterungsscheibe von 2mm bis 5mm auf.

In Weiterbildung der Erfindung kann vorgesehen sein, dass der Abschnitt der Stufenöffnungen mit dem kleineren Durchmesser mindestens eine Durchmesserdifferenz zu dem Abschnitt der Stufenöffnungen mit dem größeren Durchmesser aufweist, die einer doppelten Wandstärke der Schaftmuttern entspricht.

Um die jeweils abschnittsweise Aufnahme der Schaftmuttern zu garantieren, ist zwischen einer umlaufenden Wandung des Abschnitts mit dem größeren Durchmesser der Stufenöffnungen und den mehreren Stehbolzen zumindest ein Abstand vorausgesetzt, der der Wandstärke der Schaftmuttern entspricht. Besonders bevorzugt ist dieser Abstand zumindest so groß wie die Wandstärke der Schaftmuttern oder größer. Der Abstand zwischen der umlaufenden Wandung des Abschnitts mit dem größeren Durchmesser und den mehreren Stehbolzen ist durch den Abschnitt der Stufenöffnungen mit dem kleineren Durchmesser vorgegeben. Der Abschnitt der Stufenöffnungen mit dem kleineren Durchmesser erstreckt sich somit mindestens um die Durchmesserdifferenz zu dem Abschnitt der Stufenöffnungen mit dem größeren Durchmesser weiter in die Radschraubenöffnungen hinein, die der doppelten Wandstärke der Schaftmuttern entspricht. Somit ist ein abschnittsweises Eindringen der Schaftmuttern in die Stufenöffnungen während eines Montageprozesses nicht behindert.

In Weiterbildung der Erfindung kann vorgesehen sein, dass das Felgenzentrierelement und das Radnabenzentrierelement jeweils einstückig mit der Spurverbreiterungsscheibe ausgebildet sind.

In einer bevorzugten Ausführungsform erstreckt sich das Felgenzentrierelement umlaufend um die Mittelöffnung aus der Spurverbreiterungsscheibe heraus. Dabei weist das Felgenzentrierelement weiter eine Felgenzentrierfläche auf, die auf dem Felgenzentrierelement angeordnet ist und von der Mittellängsachse der Spurverbreiterungsscheibe abgewandt angeordnet ist. Weiter ist bei der bevorzugten Ausführungsform das Radnabenzentrierelement umlaufend an der Mittelöffnung und der Mittellängsachse der Spurverbreiterungsscheibe zugewandt angeordnet. Somit sind in der bevorzugten Ausführungsform das Felgenzentrierelement und das Radnabenzentrierelement aus dem gleichen Material wie die Spurverbreiterungsscheibe ausgebildet. Die Spurverbreiterungsscheibe ist besonders vorteilhaft aus Aluminium oder einem sonstigen vergleichsweise leichten aber dennoch robusten Material ausgebildet.

In Weiterbildung der Erfindung kann vorgesehen sein, dass das Felgenzentrierelement und das Radnabenzentrierelement als ein separates Bauteil, insbesondere als ringförmiges Bauteil, ausgebildet sind.

Es kann ein von der Spurverbreiterungsscheibe separates Bauteil vorgesehen sein, das das Felgenzentrierelement und das Radnabenzentrierelement aufweist. Besonders vorteilhaft ist das separate Bauteil als ringförmiges Bauteil ausgeführt und in die Mittelöffnung der Spurverbreiterungsscheibe einsetzbar. Dazu weist die Mittelöffnung der Spurverbreiterungsscheibe einen wesentlich größeren Durchmesser als das Zentrierelement der Radnabe auf. Das separate Bauteil ist dann in die Mittelöffnung der Spurverbreiterungsscheibe einschiebbar. Beispielsweise ist das separate Bauteil ein aus Kunststoff ausgebildeter Ring, der mittels einer Rasteinrichtung an einer umlaufenden Wandung der Mittelöffnung der Spurverbreiterungsscheibe befestigbar ist. Dieser Ring weist das Radnabenzentrierelement und das Felgenzentrierelement auf. Das Felgenzentrierelement erstreckt sich in verrastetem Zustand des separaten Bauteils in der Mittelöffnung der Spurverbreiterungsscheibe im Wesentlichen parallel und entlang der Mittellängsachse der Spurverbreiterungsscheibe von der Spurverbreiterungsscheibe weg. Weiter weist das als Ring ausgeformte separate Bauteil das Radnabenzentrierelement auf einer Innenseite auf. Das Radnabenzentrierelement erstreckt sich entlang des separaten Bauteils im Wesentlichen parallel und in Richtung der Mittellängsachse der Spurverbreiterungsscheibe während es der Mittellängsachse der Spurverbreiterungsscheibe zugewandt ist. Das Felgenzentrierelement ist der Mittellängsachse der Spurverbreiterungsscheibe jedoch abgewandt angeordnet und erstreckt sich auf einer Außenseite des separaten Bauteils. Das separate Bauteil dient somit zum einen einer Zentrierung der Spurverbreiterungsscheibe relativ zu der Radnabe und zum anderen zur Zentrierung der Spurverbreiterungsscheibe relativ zu der Felge. Dieses separate Bauteil mit der Rasteinrichtung, dem Felgenzentrierelement und dem Radnabenzentrierelement kann beispielsweise aus Kunststoff, einem kunststoffähnlichen Material oder einem sonstigen geeigneten Material ausgebildet sein. Dabei muss das separate Bauteil stabil genug sein, um die Zentrierung der Felge relativ zu der Spurverbreiterungsscheibe und die Zentrierung der Spurverbreiterungsscheibe relativ zu der Radnabe gewährleisten zu können.

In Weiterbildung der Erfindung kann vorgesehen sein, dass das Felgenzentrierelement umlaufend um eine Mittelöffnung der Spurverbreiterungsscheibe angeordnet ist sowie sich aus der Spurverbreiterungsscheibe entlang der Mittellängsachse der Spurverbreiterungsscheibe heraus erstreckt.

Das Felgenzentrierelement erstreckt sich im Wesentlichen umlaufend um die Mittelöffnung der Spurverbreiterungsscheibe aus dieser heraus. Dabei ist die Felgenzentrierfläche des Felgenzentrierelements im Wesentlichen parallel zu der Mittellängsachse der Spurverbreiterungsscheibe ausgerichtet. Diese Felgenzentrierfläche kann in einer gleichen Richtung wie sich das Felgenzentrierelement aus der Spurverbreiterungsscheibe entlang der Mittellängsachse der Spurverbreiterungsscheibe herauserstreckt konisch hin zu der Mittellängsachse der Spurverbreiterungsscheibe zulaufen. Somit können Toleranzen beim Aufschieben der Spurverbreiterungsscheibe auf die Felge ausgeglichen werden. Insbesondere relevant ist dies für Fertigungstoleranzen, die sowohl bei der Felge als auch bei der Spurverbreiterungsscheibe eine Rolle spielen können und durch das konische Zulaufen des Felgenzentrierelements hin zu der Mittellängsachse ausgeglichen werden können.

In Weiterbildung der Erfindung kann vorgesehen sein, dass das Radnabenzentrierelement als umlaufende Wandung um die Mittelöffnung ausgebildet ist.

Während die umlaufende Wandung zumindest im Wesentlichen parallel zu der Mittellängsachse der Spurverbreiterungsscheibe ausgerichtet ist, kann die umlaufende Wandung und somit das Radnabenzentrierelement in einer Ausgestaltung auch hin zu der Mittellängsachse und in einer gleichen Richtung, in der sich auch das Felgenzentrierelement aus der Spurverbreiterungsscheibe herauserstreckt, leicht konisch zulaufen. Somit können Toleranzen, insbesondere Fertigungstoleranzen der Radnabe und der Spurverbreiterungsscheibe beim Aufschieben der Spurverbreiterungsscheibe auf die Radnabe beziehungsweise auf das Zentrierelement der Radnabe ausgeglichen werden. Das Radnabenzentrierelement als umlaufende Wandung um die Mittelöffnung verjüngt sich somit hin zu der Mittellängsachse der Spurverbreiterungsscheibe in der gleichen Richtung wie sich das Felgenzentrierelement aus der Spurverbreiterungsscheibe herauserstreckt.

Gemäß der Erfindung ist eine Anordnung mit einer Radnabe, einer erfindungsgemäßen Spurverbreiterungsscheibe und einer Felge für Kraftfahrzeuge vorgesehen, wobei die Radnabe zumindest ein Zentrierelement aufweist und mehrere Stehbolzen zum Befestigen der Felge aufweist, wobei die Spurverbreiterungsscheibe relativ zu der Radnabe zentriert ist, wobei die Felge mittels des Felgenzentrierelements relativ zu der Spurverbreiterungsscheibe zentriert ist, wobei mehrere Radschraubenöffnungen der Spurverbreiterungsscheibe fluchtend zu mehreren Radschraubenöffnungen der Felge ausgerichtet sind und die mehreren Stehbolzen der Radnabe jeweils zumindest abschnittsweise in den mehreren Radschraubenöffnungen der Spurverbreiterungsscheibe angeordnet sind, wobei mehrere Schaftmuttern zur Befestigung der Felge und der Spurverbreiterungsscheibe auf der Radnabe vorgesehen sind, wobei die mehreren Schaftmuttern auf die mehreren Stehbolzen der Radnabe jeweils aufgeschraubt sind, wobei die Schaftmuttern durch die mehreren Radschraubenöffnungen der Felge hindurchragen und wobei die mehreren Schaftmuttern im Bereich der Stufenöffnungen zumindest abschnittsweise in den Abschnitt der Stufenöffnungen der Spurverbreiterungsscheibe mit dem größeren Durchmesser hineinragen.

In einem montierten Zustand befindet sich eine Anlagenfläche der Radnabe mit einer Radnabenanlagenfläche der Spurverbreiterungsscheibe in Anlage. Weiter befindet sich eine Felgenanlagenfläche der Spurverbreiterungsscheibe mit einer Anlagefläche der Felge in Anlage. Die Stehbolzen der Radnabe weisen eine bestimmte Länge auf. Die Stehbolzen der Radnabe ragen durch die Radschraubenöffnungen der Spurverbreiterungsscheibe hindurch und zumindest in die Radschraubenöffnungen der Felge hinein. Mit einer Zunahme der Dicke der Spurverbreiterungsscheibe entlang der Mittellängsachse der Spurverbreiterungsscheibe verringert sich somit ein Hineinragen der Stehbolzen in die Radschraubenöffnungen der Felge. Besonders vorteilhaft bemisst sich somit eine Schaftlänge der Schaftmuttern daran, dass ein ausreichender Gewindeeingriff der Schaftmuttern auf den mehreren Stehbolzen gewährleistet ist. Für den ausreichenden Gewindeeingriff ragen die Schaftmuttern im Bereich der Stufenöffnungen zumindest abschnittsweise in den Abschnitt der Stufenöffnungen der Spurverbreiterungsscheibe hinein, der mit dem größeren Durchmesser ausgeführt ist.

In Weiterbildung der Erfindung kann vorgesehen sein, dass die Schaftlänge der mehreren Schaftmuttern von einer Dicke der Spurverbreiterungsscheibe abhängt.

Mit einer zunehmenden Dicke der Spurverbreiterungsscheibe vergrößert sich ein Abstand der Felge zu der Radnabe. Da die mehreren Stehbolzen an der Radnabe fixiert sind, werden diese mit der zunehmenden Dicke mehr und mehr von den Radschraubenöffnungen der Spurverbreiterungsscheibe in Richtung entlang der Mittellängsachse der Spurverbreiterungsscheibe und weg von der Radnabe umgeben. Damit dennoch ein ausreichender Gewindeeingriff der Schaftmuttern auf den mehreren Stehbolzen garantiert ist, ist die Schaftlänge der Schaftmuttern länger auszuführen und somit von der Dicke der Spurverbreiterungsscheibe abhängig.

In Weiterbildung der Erfindung kann vorgesehen sein, dass eine Stufenhöhe der Stufenbohrungen von der Dicke der Spurverbreiterungsscheibe abhängt.

Gemäß der Erfindung ist eine Anordnung mit einer Radnabe, einer erfindungsgemäßen Spurverbreiterungsscheibe und einer Felge für Kraftfahrzeuge vorgesehen, wobei die Radnabe zumindest ein Zentrierelement aufweist und mehrere Stehbolzen zum Befestigen der Felge aufweist, wobei die Spurverbreiterungsscheibe relativ zu der Radnabe zentriert ist, wobei die Felge mittels des Felgenzentrierelements relativ zu der Spurverbreiterungsscheibe zentriert ist, wobei mehrere Radschraubenöffnungen der Spurverbreiterungsscheibe fluchtend zu mehreren Radschraubenöffnungen der Felge ausgerichtet sind und die Stehbolzen der Radnabe jeweils zumindest abschnittsweise in den Radschraubenöffnungen der Spurverbreiterungsscheibe angeordnet sind, wobei mehrere Schaftmuttern zur Befestigung der Felge und der Spurverbreiterungsscheibe auf der Radnabe vorgesehen sind, wobei die Schaftmuttern auf die Stehbolzen der Radnabe jeweils aufgeschraubt sind, wobei die Stehbolzen mit Hülsen versehen sind, wobei die Hülsen jeweils in die Radschraubenöffnungen der Spurverbreiterungsscheibe von einer Anlagefläche der Radnabe aus hineinragen und einen Abstand zwischen einer Mantelfläche der Stehbolzen zu einer umlaufenden Wandung der Radschraubenöffnungen der Spurverbreiterungsscheibe sicherstellen und wobei die Schaftmuttern durch die Radschraubenöffnungen der Felge hindurchragen, wobei die Schaftmuttern im Bereich der Radschraubenöffnungen zumindest abschnittsweise in die Radschraubenöffnungen der Spurverbreiterungsscheibe hineinragen.

Erfindungsgemäß ist vorgesehen, dass jeder Stehbolzen mit einer Hülse versehen ist. Die Hülsen können dabei aus Kunststoff oder aus kunststoffähnlichem oder auch aus sonstigen geeigneten Materialien ausgeführt sein. Die Hülsen sind auf die Stehbolzen aufgeschoben und bestimmen einen Abstand zu der umlaufenden Wandung der mehreren Radschraubenöffnungen der Spurverbreiterungsscheibe. Durch den Abstand der Mantelfläche der Stehbolzen zu der umlaufenden Wandung der Radschraubenöffnungen der Spurverbreiterungsscheibe ist sichergestellt, dass die Schaftmuttern zumindest abschnittsweise in die Radschraubenöffnungen der Spurverbreiterungsscheibe hineinragen. Die Hülsen können auf die Stehbolzen aufgeschoben sein.

In Weiterbildung der Erfindung kann vorgesehen sein, dass der Abstand zwischen der Mantelfläche der mehreren Stehbolzen zu der umlaufenden Wandung der mehreren Radschraubenöffnungen zumindest einer Wandstärke der mehreren Schaftmuttern entspricht.

Damit die Schaftmuttern, während sie auf die Stehbolzen aufgeschraubt sind, in die Radschraubenöffnungen der Spurverbreiterungsscheibe hineinragen können, ist zu gewährleisten, dass der Abstand zwischen der Mantelfläche der Stehbolzen und der umlaufenden Wandung der Radschraubenöffnungen während eines Einschraubprozesses zumindest so groß ist wie die Wandstärke der Schaftmuttern t.

In Weiterbildung der Erfindung kann vorgesehen sein, dass die Hülsen jeweils eine Dicke entlang der Mittellängsachse der Spurverbreiterungsscheibe aufweisen, die zwischen 2 mm und 5 mm liegt.

Besonders vorteilhaft weisen die Hülsen jeweils eine Dicke entlang der Mittellängsachse der Spurverbreiterungsscheibe von 2 mm bis 5 mm auf. Die Dicke ist insbesondere entscheidend, dass eine Zentrierung der Radschraubenöffnungen der Spurverbreiterungsscheibe auf den Stehbolzen und somit an den Hülsen, die auf die Stehbolzen aufgeschoben sind, erfolgreich ist.

### KURZBESCHREIBUNG DER ZEICHNUNGEN

Weitere Vorteile und Aspekte der Erfindung ergeben sich aus den Ansprüchen und aus der nachfolgenden Beschreibung bevorzugter Ausführungsbeispiele der Erfindung, die nachfolgend anhand der Figuren erläutert sind. Dabei zeigen:
- Fig. 1: eine isometrische Ansicht von schräg oben auf eine Spurverbreiterungsscheibe der Fig. 1;
- Fig. 2: eine isometrische Ansicht von schräg unten auf die Spurverbreiterungsscheibe der Fig. 1;
- Fig. 3: eine Seitenansicht der Spurverbreiterungsscheibe der Fig. 1;
- Fig. 4: eine Draufsicht der Spurverbreiterungsscheibe der Fig. 1;
- Fig. 5: eine Untersicht der Spurverbreiterungsscheibe der Fig. 1;
- Fig. 6: eine teilweise geschnittene isometrische Ansicht von schräg oben einer Anordnung mit einer Radnabe, einer Felge und der Spurverbreiterungsscheibe der Fig. 1;
- Fig. 7: eine teilweise geschnittene Seitenansicht der Anordnung gemäß Fig. 6 mit der Radnabe, der Felge und der Spurverbreiterungsscheibe der Fig. 1;
- Fig. 8: eine isometrische Ansicht von schräg unten auf eine Spurverbreiterungsscheibe gemäß einer zweiten Ausführungsform der Erfindung;
- Fig. 9: eine geschnittene Seitenansicht der Spurverbreiterungsscheibe der Fig. 8.

### DETAILLIERTE BESCHREIBUNG DER AUSFÜHRUNGSBEISPIELE

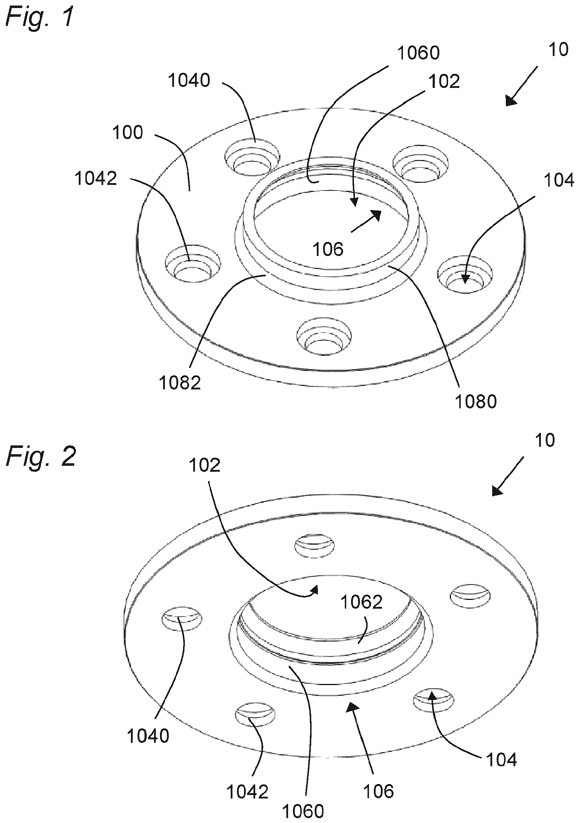

Fig. 1 zeigt eine isometrische Ansicht von schräg oben auf eine Spurverbreiterungsscheibe 10 gemäß einer ersten Ausführungsform der Erfindung.

Die Spurverbreiterungsscheibe 10 weist eine Mittelöffnung 102 sowie fünf Radschraubenöffnungen 104 auf. Die Radschraubenöffnungen 104 sind jeweils als Stufenöffnungen ausgebildet. Die Radschraubenöffnungen 104 weisen einen ersten Abschnitt 1040 mit einem größeren Durchmesser und einen zweiten Abschnitt 1042 mit einem kleineren Durchmesser auf. Weiter liegen die fünf Radschraubenöffnungen 104 auf einem Durchmesser, der zwischen einem Außendurchmesser der Spurverbreiterungsscheibe 10 und einem Durchmesser der Mittelöffnung 102 liegt.

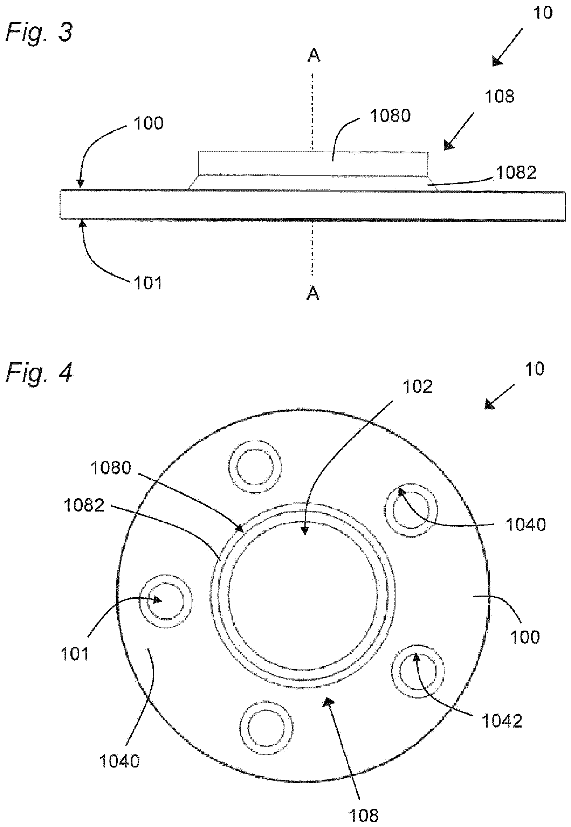

Außerdem ist ein Radnabenzentrierelement 106 vorgesehen, das entlang einer in Fig. 3 dargestellten Mittellängsachse Ader Spurverbreiterungsscheibe 10 einem in Fig. 1 dargestellten Felgenzentrierelement 108 angeordnet ist. Sowohl das Radnabenzentrierelemente 106 als auch das Felgenzentrierelement 108 erstrecken sich zumindest abschnittsweise aus einer umlaufenden Wandung der Mittelöffnung 102.

Genauer ist das Radnabenzentrierelement 106 aus der umlaufenden Wandung der Mittelöffnung 102 ausgebildet und weist eine Radnabenzentrierfläche 1060 auf. Die Radnabenzentrierfläche 1060 kann leicht konisch ausgebildet sein, um beim Aufsetzen der Spurverbreiterungsscheibe 10 auf ein nicht dargestelltes Zentrierelement 202 der Radnabe 20 Toleranzen, insbesondere Fertigungstoleranzen, auszugleichen. An die Radnabenzentrierfläche 1060 schließt sich eine konisch zu der Mittellängsachse A der Spurverbreiterungsscheibe 10 zulaufende Fläche 1062 des Radnabenzentrierelements 106 an.

Weiter erstreckt sich das Felgenzentrierelement 108 aus einer Felgenanlagefläche 100 heraus. Dabei ist eine Felgenzentrierfläche 1080 des Felgenzentrierelements 108 konisch, so dass ein Ausgleich von Fertigungstoleranzen und eine Zentrierung einer nicht dargestellten Felge 30 auf der Spurverbreiterungsscheibe 10 möglich ist Weiter ist eine von der Felgenanlagefläche 100 konisch zu der Felgenzentrierfläche 1080 laufende Fläche 1082 des Felgenzentrierelements 108 vorgesehen .

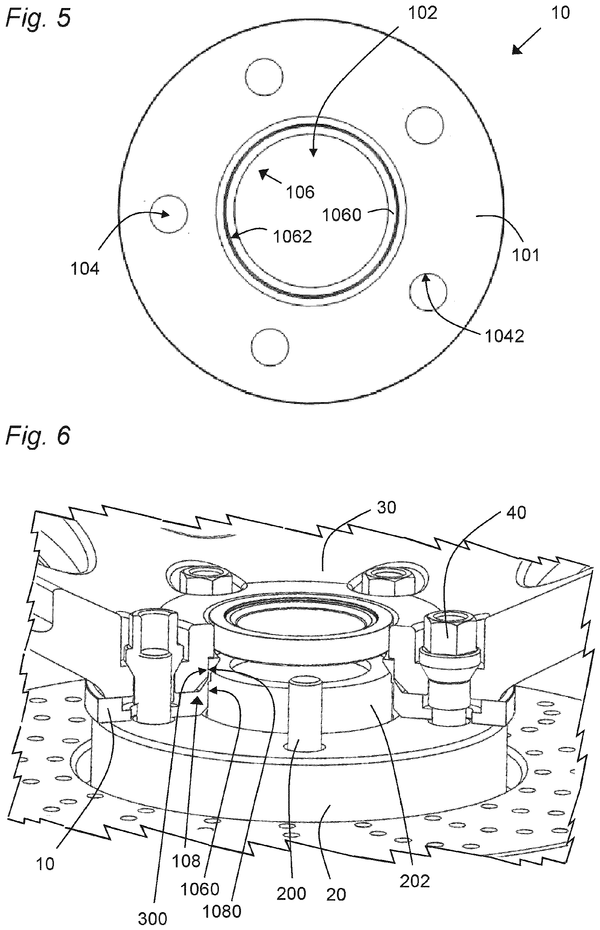

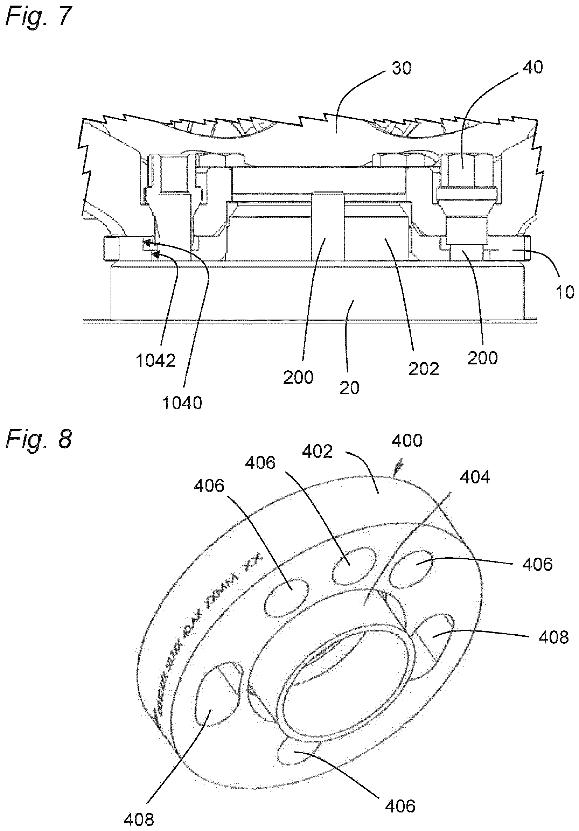

Fig. 2 zeigt eine isometrische Ansicht von schräg unten auf die Spurverbreiterungsscheibe 10 gemäß der ersten Ausführungsform der Erfindung. Fig. 2 zeigt im Wesentlichen die Merkmale, die bereits in Fig. 1 dargestellt und erläutert worden sind. Im Vergleich zu Fig. 1 zeigt Fig. 2 die Radnabenanlagefläche 101, die in einem montierten Zustand an einer nicht dargestellten Radnabe 20 anliegt, siehe dazu die Fig. 6 und 7. Außerdem sind in Fig. 2 die Mittelöffnung 102, die fünf Radschraubenöffnungen 104, das Radnabenzentrierelement 106 mit der Radnabenzentrierfläche 1060 und der Fläche 1062 zu erkennen.

Fig. 3 zeigt eine Seitenansicht der Spurverbreiterungsscheibe 10 gemäß der ersten Ausführungsform der Erfindung. Fig. 3 zeigt im Wesentlichen die Merkmale, die bereits in den Fig. 1 und 2 dargestellt und erläutert worden sind. Es sind das Felgenzentrierelement 108 sowie die Felgenanlagefläche 100, die Radnabenanlagefläche 101 und die Mittellängsachse A dargestellt. Weiter sind die Felgenzentrierfläche 1080 und die Fläche 1082 des Felgenzentrierelements 108 sichtbar.

Fig. 4 zeigt eine Draufsicht der Spurverbreiterungsscheibe 10 gemäß der ersten Ausführungsform der Erfindung. Die Fig. 4 zeigt im Wesentlichen die Merkmale, die bereits in den Fig. 1 bis 3 dargestellt und erläutert worden sind. Es ist die Felgenanlagefläche 100, die Mittelöffnung 102 als auch die fünf Radschraubenöffnungen 104 in Form der Stufenöffnungen dargestellt. Dabei ist eine Durchmesserdifferenz des ersten Abschnitts 1040 mit dem größeren Durchmesser zu dem zweiten Abschnitt 1042 mit dem kleineren Durchmesser der Radschraubenöffnungen 104 sichtbar. Das in der Draufsicht dargestellte Felgenzentrierelement 108 zeigt sowohl die umlaufende Felgenzentrierfläche 1080 als auch die Fläche 1082 des Felgenzentrierelements 108.

Fig. 5 zeigt eine Untersicht der Spurverbreiterungsscheibe 10 gemäß der ersten Ausführungsform der Erfindung. Fig. 5 zeigt im Wesentlichen die Merkmale, die bereits in den Fig. 1 bis 4 dargestellt und erläutert worden sind. Es sind die Radnabenanlagefläche 101, die Mittelöffnung 102 und die als Stufenöffnungen ausgestalteten fünf Radschraubenöffnungen 104 dargestellt. Dabei ist bei der in Fig. 4 dargestellten Untersicht der Spurverbreiterungsscheibe 10 lediglich der zweite Abschnitt 1042 mit dem kleineren Durchmesser der Radschraubenöffnungen 104 sichtbar. Weiter sind das Radnabenzentrierelement 106 mit der Radnabenzentrierfläche 1060 und der der Fläche 1062 abgebildet.

Fig. 6 zeigt eine teilweise geschnittene isometrische Ansicht von schräg oben einer Anordnung mit einer Radnabe 20, einer Felge 30 und der Spurverbreiterungsscheibe 10 gemäß der ersten Ausführungsform der Erfindung. Die Spurverbreiterungsscheibe 10 befindet sich zwischen der Radnabe 20 und der Felge 30 und liegt sowohl an der Radnabe 20 als auch an der Felge 30 an. Die Felge 30 ist mit mehreren Schaftmuttern 40 an Stehbolzen 200 der Radnabe 20 befestigt, so dass die Spurverbreiterungsscheibe 10 zwischen der Felge 30 und der Radnabe 20 geklemmt ist. In dem Ausschnitt der Fig. 6 sind von den eigentlich fünf Schaftmuttern 40 lediglich drei Schaftmuttern 40 und eine geschnittene Schaftmutter 40 abgebildet. Es ist zu erkennen, dass die Spurverbreiterungsscheibe 10 relativ zu dem Zentrierelement 202 der Radnabe 20 zentriert ist, da die Radnabenzentrierfläche 1060 an dem Zentrierelement 202 der Radnabe 20 anliegt. Die Felge 30 ist relativ zu der Spurverbreiterungsscheibe 10 an dem Felgenzentrierelement 108 der Spurverbreiterungsscheibe 10 zentriert, da die Felgenzentrierfläche 1080 an der Zentrierfläche 300 der Felge 30 anliegt.

Fig. 7 zeigt eine teilweise geschnittene Seitenansicht der Anordnung gemäß Fig. 6 mit der Radnabe 20, der Felge 30 und der Spurverbreiterungsscheibe 10 gemäß der ersten Ausführungsform der Erfindung. Fig. 7 zeigt im Wesentlichen die Merkmale, die bereits in der Fig. 6 beschrieben und dargestellt worden sind.

Fig. 8 zeigt eine isometrische Ansicht von schräg unten auf eine Spurverbreiterungsscheibe 400 gemäß einer zweiten Ausführungsform der Erfindung. Die Spurverbreiterungsscheibe 400 ist zweiteilig ausgebildet und weist einen Spurscheibenring 402 und ein Spurscheibenzentrierelement 404 auf.

Der Spurscheibenring 402 ist mit insgesamt sechs Radschraubenöffnungen 406, 408 versehen, wobei vier Radschraubenöffnungen 406 als Stufenbohrungen mit kreisrundem Querschnitt und zwei Radschraubenöffnungen 408 als Stufenbohrungen in Form eines gekrümmten Langlochs ausgebildet sind. Die Radschraubenöffnungen 406, 408 sind so ausgebildet und angeordnet, dass verschiedene Lochbilder von Felgen und Radnaben mit ein und demselben Spurscheibenring 402 abgedeckt werden können. Die Stufenbohrungen sind im Übrigen so ausgebildet, wie anhand der ersten Ausführungsform der Fig. 1 bis 8 erläutert wurde.

Das Spurscheibenzentrierelement 404 wird mittels in Fig. 8 nicht erkennbarer Rastelemente in einer Mittelöffnung des Spurscheibenrings 402 befestigt und ist mit einer Radnabenzentrierfläche und einer Felgenzentrierfläche versehen. Durch Wechseln des Spurscheibenzentrierelements 404 können unterschiedliche Radnabendurchmesser und Felgenöffnungsdurchmesser abgedeckt werden. Das Spurscheibenzentrierelement 404 kann beispielsweise aus Kunststoff bestehen.

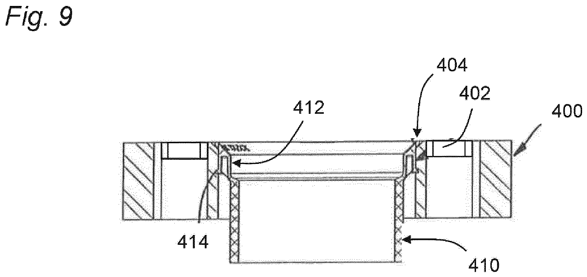

Fig. 9 zeigt eine geschnittene Seitenansicht der Spurverbreiterungsscheibe 400 der Fig. 8. Das Spurscheibenzentrierelement 404 ist mittels Rastarmen 414 an dem Spurscheibenring 402 befestigt. Rastnasen an den freien Enden der Rastarme 414 greifen hierzu in eine umlaufende Nut in der Mittelöffnung des Spurscheibenrings 402 ein. An dem Spurscheibenzentrierelement 404 sind die Felgenzentrierfläche 410 und die Radnabenzentrierfläche 412 zu erkennen. Sowohl die Felgenzentrierfläche 410 als auch die Radnabenzentrierfläche 412 können leicht konisch sein, so dass sie sich in der Ansicht der Fig. 9 nach oben hin erweitern, um Toleranzen der Felge und der Radnabe auszugleichen und eine zuverlässige Zentrierung sicherzustellen.

## Patentansprüche

1. Anordnung mit einer Radnabe (20), einer Spurverbreiterungsscheibe (10; 400) für Kraftfahrzeuge mit:
- mehreren Radschraubenöffnungen (104),
- einem Felgenzentrierelement (108) zum Zentrieren einer Felge (30) relativ zu der Spurverbreiterungsscheibe (10; 400) und
- einem Radnabenzentrierelement (106) zum Zentrieren der Spurverbreiterungsscheibe (10) relativ zu einer Radnabe (20),
wobei
die mehreren Radschraubenöffnungen (104) jeweils als Stufenöffnungen zur jeweils abschnittsweisen Aufnahme von Schaftmuttern (40) ausgebildet sind, wobei ein Abschnitt der Stufenöffnungen mit einem größeren Durchmesser auf einer Seite der Spurverbreiterungsscheibe (10; 400) angeordnet ist, auf der das Felgenzentrierelement (108) angeordnet ist,
und einer Felge (30) für Kraftfahrzeuge, wobei:
- die Radnabe (20) zumindest ein Zentrierelement (202) aufweist und mehrere Stehbolzen (200) zum Befestigen der Felge (30) aufweist,
- die Spurverbreiterungsscheibe (10; 400) relativ zu der Radnabe (20) zentriert ist,
- die Felge (30) mittels des Felgenzentrierelements (108) relativ zu der Spurverbreiterungsscheibe (10; 400) zentriert ist,
- mehrere Radschraubenöffnungen (104) der Spurverbreiterungsscheibe (10; 400) fluchtend zu mehreren Radschraubenöffnungen der Felge (30) ausgerichtet sind und die mehreren Stehbolzen (200) der Radnabe (20) jeweils zumindest abschnittsweise in den mehreren Radschraubenöffnungen (104) der Spurverbreiterungsscheibe (10; 400) angeordnet sind,
- mehrere Schaftmuttern (40) zur Befestigung der Felge (30) und der Spurverbreiterungsscheibe (10; 400) auf der Radnabe (20) vorgesehen sind,
- die mehreren Schaftmuttern (40) auf die mehreren Stehbolzen (200) der Radnabe (20) jeweils aufgeschraubt sind,
**dadurch gekennzeichnet, dass**
die Schaftmuttern (40) durch die mehreren Radschraubenöffnungen der Felge (30) hindurchragen und dass die mehreren Schaftmuttern (40) im Bereich der Stufenöffnungen zumindest abschnittsweise in den Abschnitt (1040) der Stufenöffnungen der Spurverbreiterungsscheibe (10; 400) mit dem größeren Durchmesser hineinragen.

2. Anordnung nach Anspruch 1, **dadurch gekennzeichnet, dass** die Schaftlänge der mehreren Schaftmuttern (40) von einer Dicke der Spurverbreiterungsscheibe (10; 400) abhängt.

3. Anordnung nach Anspruch 1 oder 2, **dadurch gekennzeichnet, dass** eine Stufenhöhe der Stufenbohrungen von der Dicke der Spurverbreiterungsscheibe (10; 400) abhängt.

4. Anordnung nach einem der vorstehenden Ansprüche, **dadurch gekennzeichnet, dass** die Spurverbreiterungsscheibe (10; 400) eine Dicke entlang einer Mittellängsachse der Spurverbreiterungsscheibe (10) aufweist, die kleiner als 15 mm, insbesondere 2 mm, insbesondere 3 mm, 5 mm, 8 mm oder 10 mm, insbesondere zwischen 2 mm und 15 mm, ist.

5. Anordnung nach einem der vorstehenden Ansprüche, **dadurch gekennzeichnet, dass** ein Abschnitt (1042) der Stufenöffnungen mit einem kleineren Durchmesser eine Dicke entlang der Mittellängsachse der Spurverbreiterungsscheibe (10; 400) aufweist, die zwischen 2 mm und 5 mm liegt.

6. Anordnung nach mindestens einem der vorstehenden Ansprüche, **dadurch gekennzeichnet, dass** der Abschnitt (1042) der Stufenöffnungen mit dem kleineren Durchmesser mindestens eine Durchmesserdifferenz zu dem Abschnitt (1040) der Stufenöffnungen mit dem größeren Durchmesser aufweist, die einer doppelten Wandstärke der Schaftmuttern (40) entspricht.

7. Anordnung nach mindestens einem der vorstehenden Ansprüche, **dadurch gekennzeichnet, dass** das Felgenzentrierelement (108) und das Radnabenzentrierelement (106) jeweils einstückig mit der Spurverbreiterungsscheibe (10) ausgebildet sind.

8. Anordnung nach mindestens einem der Ansprüche 1 bis 6, **dadurch gekennzeichnet, dass** das Felgenzentrierelement und das Radnabenzentrierelement als ein separates Bauteil, insbesondere als ringförmiges Bauteil, ausgebildet sind.

9. Anordnung nach mindestens einem der vorstehenden Ansprüche, **dadurch gekennzeichnet, dass** das Felgenzentrierelement (108) umlaufend um eine Mittelöffnung der Spurverbreiterungsscheibe (10) angeordnet ist sowie sich aus der Spurverbreiterungsscheibe (10) entlang der Mittellängsachse der Spurverbreiterungsscheibe herauserstreckt.

10. Anordnung nach mindestens einem der vorstehenden Ansprüche, **dadurch gekennzeichnet, dass** alle Radschraubenöffnungen (104) als Stufenöffnungen zur abschnittsweisen Aufnahme von Schaftmuttern (40) ausgebildet sind.

11. Anordnung mit einer Radnabe (20), einer Spurverbreiterungsscheibe (10, 400) und einer Felge (30) für Kraftfahrzeuge, wobei
- die Radnabe zumindest ein Zentrierelement (202) aufweist und mehrere Stehbolzen (200) zum Befestigen der Felge aufweist,
- die Spurverbreiterungsscheibe relativ zu der Radnabe zentriert ist,
- die Felge mittels des Felgenzentrierelements (108) relativ zu der Spurverbreiterungsscheibe zentriert ist,
- mehrere Radschraubenöffnungen (104) der Spurverbreiterungsscheibe fluchtend zu mehreren Radschraubenöffnungen der Felge ausgerichtet sind und die mehreren Stehbolzen der Radnabe jeweils zumindest abschnittsweise in den mehreren Radschraubenöffnungen der Spurverbreiterungsscheibe angeordnet sind,
- mehrere Schaftmuttern (40) zur Befestigung der Felge und der Spurverbreiterungsscheibe auf der Radnabe vorgesehen sind,
- die mehreren Schaftmuttern auf die mehreren Stehbolzen der Radnabe jeweils aufgeschraubt sind,
**dadurch gekennzeichnet, dass**
wenigstens ein Stehbolzen mit einer Hülse versehen ist, wobei die Hülse in die Radschraubenöffnung der Spurverbreiterungsscheibe von einer Anlagefläche (100) der Radnabe aus hineinragt und einen Abstand zwischen einer Mantelfläche des Stehbolzens zu einer umlaufenden Wandung der Radschraubenöffnung der Spurverbreiterungsscheibe sicherstellt und dass
die Schaftmuttern durch die Radschraubenöffnungen der Felge hindurchragen, wobei die Schaftmuttern im Bereich der Radschraubenöffnungen zumindest abschnittsweise in die Radschraubenöffnungen der Spurverbreiterungsscheibe hineinragen und wobei jeweils eine Hülse auf jeden Stehbolzen aufgeschoben ist.

12. Anordnung nach Anspruch 11, **dadurch gekennzeichnet, dass** der Abstand zwischen der Mantelfläche des Stehbolzens zu der umlaufenden Wandung der Radschraubenöffnung zumindest einer Wandstärke der Schaftmutter entspricht.

13. Anordnung nach Anspruch11 oder 12, **dadurch gekennzeichnet, dass** die Hülse eine Dicke entlang der Mittellängsachse der Spurverbreiterungsscheibe aufweist, die zwischen 2 mm und 5 mm liegt.

## Claims

1. Arrangement having a wheel hub (20), having a wheel spacer disc (10; 400) for motor vehicles with:
- multiple wheel bolt openings (104),
- a rim-centring element (108) for centring a rim (30) relative to the wheel spacer disc (10; 400), and
- a wheel-hub-centring element (106) for centring the wheel spacer disc (10) relative to a wheel hub (20),
wherein
the multiple wheel bolt openings (104) are each formed as stepped openings for in each case sectional receiving of shank nuts (40), wherein a section of the stepped openings with a relatively large diameter is arranged on a side of the wheel spacer disc (10; 400) on which the rim-centring element (108) is arranged,
and having a rim (30) for motor vehicles, wherein:
- the wheel hub (20) has at least one centring element (202) and multiple stud bolts (200) for fastening of the rim (30),
- the wheel spacer disc (10; 400) is centred relative to the wheel hub (20),
- the rim (30) is centred relative to the wheel spacer disc (10; 400) by means of the rim-centring element (108),
- multiple wheel bolt openings (104) of the wheel spacer disc (10; 400) are oriented so as to be aligned with multiple wheel bolt openings of the rim (30), and the multiple stud bolts (200) of the wheel hub (20) are each arranged at least sectionally in the multiple wheel bolt openings (104) of the wheel spacer disc (10; 400),
- provision is made of multiple shank nuts (40) for fastening of the rim (30) and of the wheel spacer disc (10; 400) to the wheel hub (20),
- the multiple shank nuts (40) are each screwed onto the multiple stud bolts (200) of the wheel hub (20),
**characterized in that**
the shank nuts (40) project through the multiple wheel bolt openings of the rim (30), and **in that** the multiple shank nuts (40), in the region of the stepped openings, project at least sectionally into the section (1040) of the stepped openings of the wheel spacer disc (10; 400) with the relatively large diameter.

2. Arrangement according to Claim 1, **characterized in that** the shank length of the multiple shank nuts (40) depends on a thickness of the wheel spacer disc (10; 400).

3. Arrangement according to Claim 1 or 2, **characterized in that** a step height of the stepped bores depends on the thickness of the wheel spacer disc (10; 400).

4. Arrangement according to one of the preceding claims, **characterized in that** the wheel spacer disc (10; 400) has a thickness along a central longitudinal axis of the wheel spacer disc (10) that is less than 15 mm, in particular 2 mm, in particular 3 mm, 5 mm, 8 mm or 10 mm, in particular between 2 mm and 15 mm.

5. Arrangement according to one of the preceding claims, **characterized in that** a section (1042) of the stepped openings with a relatively small diameter has a thickness along the central longitudinal axis of the wheel spacer disc (10; 400) that is between 2 mm and 5 mm.

6. Arrangement according to at least one of the preceding claims, **characterized in that** the section (1042) of the stepped openings with the relatively small diameter has at least a difference in diameter in relation to the section (1040) of the stepped openings with the relatively large diameter that corresponds to twice the wall thickness of the shank nuts (40).

7. Arrangement according to at least one of the preceding claims, **characterized in that** the rim-centring element (108) and the wheel-hub-centring element (106) are each formed in one piece with the wheel spacer disc (10).

8. Arrangement according to at least one of Claims 1 to 6, **characterized in that** the rim-centring element and the wheel-hub-centring element are formed as a separate component, in particular as an annular component.

9. Arrangement according to at least one of the preceding claims, **characterized in that** the rim-centring element (108) is arranged in an encircling manner around a central opening of the wheel spacer disc (10) and extends out of the wheel spacer disc (10) along the central longitudinal axis of the wheel spacer disc.

10. Arrangement according to at least one of the preceding claims, **characterized in that** all the wheel bolt openings (104) are in the form of stepped openings for sectional receiving of shank nuts (40).

11. Arrangement having a wheel hub (20), having a wheel spacer disc (10; 400) and having a rim (30) for motor vehicles,
wherein
- the wheel hub (20) has at least one centring element (202) and multiple stud bolts (200) for fastening of the rim,
- the wheel spacer disc is centred relative to the wheel hub,
- the rim is centred relative to the wheel spacer disc by means of the rim-centring element (108),
- multiple wheel bolt openings (104) of the wheel spacer disc are oriented so as to be aligned with multiple wheel bolt openings of the rim, and the multiple stud bolts of the wheel hub are each arranged at least sectionally in the multiple wheel bolt openings of the wheel spacer disc,
- provision is made of multiple shank nuts (40) for fastening of the rim and the wheel spacer disc to the wheel hub,
- the multiple shank nuts are each screwed onto the multiple stud bolts of the wheel hub,
**characterized in that**
at least one stud bolt is provided with a sleeve, wherein the sleeve projects from an abutment surface (100) of the wheel hub into the wheel bolt opening of the wheel spacer disc and ensures a spacing between a lateral surface of the stud bolt and an encircling wall of the wheel bolt opening of the wheel spacer disc, and **in that**
the shank nuts project through the wheel bolt openings of the rim, wherein the shank nuts, in the region of the wheel bolt openings, project at least sectionally into the wheel bolt openings of the wheel spacer disc, and wherein in each case one sleeve is pushed onto each stud bolt.

12. Arrangement according to Claim 11, **characterized in that** the spacing between the lateral surface of the stud bolt and the encircling wall of the wheel bolt opening corresponds at least to a wall thickness of the shank nut.

13. Arrangement according to Claim 11 or 12, **characterized in that** the sleeve has a thickness along the central longitudinal axis of the wheel spacer disc that is between 2 mm and 5 mm.

## Revendications

1. Agencement comprenant un moyeu de roue (20), un disque (10 ; 400) d'élargissement de voie pour véhicules automobiles comprenant :
- une pluralité d'ouvertures (104) pour vis de roue,
- un élément (108) de centrage de jante, pour centrer une jante (30) par rapport au disque (10 ; 400) d'élargissement de voie, et
- un élément (106) de centrage de moyeu de roue pour centrer le disque (10) d'élargissement de voie par rapport à un moyeu de roue (20),
dans lequel
les ouvertures de la pluralité d'ouvertures (104) pour vis de roue sont chacune réalisées sous forme d'ouvertures étagées destinées à recevoir chacune partiellement des écrous à tige (40), une portion des ouvertures étagées qui présentent un diamètre plus grand étant agencée sur un côté du disque (10 ; 400) d'élargissement de voie sur lequel est agencé l'élément (108) de centrage de jante,
et une jante (30) pour véhicules automobiles, dans lequel :
- le moyeu de roue (20) présente au moins un élément de centrage (202) et présente plusieurs goujons (200) pour la fixation de la jante (30),
- le disque (10 ; 400) d'élargissement de voie est centré par rapport au moyeu de roue (20),
- la jante (30) est centrée par rapport au disque (10 ; 400) d'élargissement de voie au moyen de l'élément (108) de centrage de jante,
- plusieurs ouvertures (104) pour vis de roue du disque (10 ; 400) d'élargissement de voie sont alignées avec plusieurs ouvertures de vis de roue de la jante (30) et les goujons de la pluralité de goujons (200) du moyeu de roue (20) sont chacun agencés au moins partiellement dans les ouvertures de la pluralité d'ouvertures (104) pour vis de roue du disque (10 ; 400) d'élargissement de voie,
- plusieurs écrous à tige (40) sont prévus pour fixer la jante (30) et le disque (10 ; 400) d'élargissement de voie sur le moyeu de roue (20),
- les différents écrous à tige (40) sont chacun vissés sur les différents goujons (200) du moyeu de roue (20),
**caractérisé en ce que**
les écrous à tige (40) traversent les ouvertures de la pluralité d'ouvertures à vis de roue de la jante (30) et **en ce que** les écrous à tige de la pluralité d'écrous à tige (40) pénètrent, dans la zone des ouvertures étagées, au moins partiellement, dans la partie (1040) des ouvertures étagées du disque (10 ; 400) d'élargissement de voie ayant le plus grand diamètre.

2. Agencement selon la revendication 1, **caractérisé en ce que** la longueur de tige de la pluralité d'écrous à tige (40) dépend d'une épaisseur du disque (10 ; 400) d'élargissement de voie.

3. Agencement selon la revendication 1 ou la revendication 2, **caractérisé en ce qu'**une hauteur d'étagement des ouvertures étagées dépend de l'épaisseur du disque (10 ; 400) d'élargissement de voie.

4. Agencement selon l'une des revendications précédentes, **caractérisé en ce que** le disque (10 ; 400) d'élargissement de voie présente une épaisseur le long d'un axe longitudinal central du disque (10) d'élargissement de voie qui est inférieure à 15 mm, en particulier 2 mm, notamment 3 mm, 5 mm, 8 mm ou 10 mm, notamment entre 2 mm et 15 mm.

5. Agencement selon l'une quelconque des revendications précédentes, **caractérisé en ce qu'**une portion (1042) des ouvertures étagées de plus petit diamètre présente une épaisseur le long de l'axe longitudinal central du disque (10 ; 400) d'élargissement de voie qui est comprise entre 2 mm et 5 mm.

6. Agencement selon au moins l'une des revendications précédentes, **caractérisé en ce que** la portion (1042) des ouvertures étagées de plus petit diamètre présente au moins une différence de diamètre par rapport à la portion (1040) des ouvertures étagées de plus grand diamètre qui correspond au double de l'épaisseur de paroi des écrous à tige (40).

7. Agencement selon au moins l'une des revendications précédentes, **caractérisé en ce que** l'élément (108) de centrage de jante et l'élément (106) de centrage de moyeu de roue sont chacun formés en une seule pièce avec le disque (10) d'élargissement de voie.

8. Agencement selon au moins l'une des revendications 1 à 6, **caractérisé en ce que** l'élément de centrage de jante et l'élément de centrage de moyeu de roue sont conçus sous forme de composant séparé, en particulier sous forme de composant annulaire.

9. Agencement selon au moins l'une des revendications précédentes, **caractérisé en ce que** l'élément (108) de centrage de jante est agencé circonférentiellement autour d'une ouverture centrale du disque (10) d'élargissement de voie et s'étend hors du disque (10) d'élargissement de voie le long de l'axe longitudinal central du disque d'élargissement de voie.

10. Agencement selon au moins l'une des revendications précédentes, **caractérisé en ce que** toutes les ouvertures (104) pour vis de roue sont réalisées sous forme d'ouvertures étagées destinées à recevoir partiellement des écrous à tige (40) .

11. Agencement comprenant un moyeu de roue (20), un disque (10, 400) d'élargissement de voie et une jante (30) pour véhicules automobiles, dans lequel
- le moyeu de roue comporte au moins un élément de centrage (202) et présente plusieurs goujons (200) pour la fixation de la jante,
- le disque d'élargissement de voie est centré par rapport au moyeu de roue,
- la jante est centrée par rapport au disque d'élargissement de voie au moyen de l'élément (108) de centrage de jante,
- plusieurs ouvertures (104) pour vis de roue du disque d'élargissement de voie sont alignées avec plusieurs ouvertures de vis de roue de la jante et les goujons de la pluralité de goujons du moyeu de roue sont chacun disposés au moins partiellement dans les ouvertures de la pluralité d'ouvertures de vis de roue du disque d'élargissement de voie,
- plusieurs écrous à tige (40) sont prévus pour fixer la jante et le disque d'élargissement de voie sur le moyeu de roue,
- la pluralité d'écrous à tige est vissée sur la pluralité de goujons du moyeu de roue,
**caractérisé en ce que**
au moins un goujon est pourvu d'une douille, la douille pénétrant dans l'ouverture pour vis de roue du disque d'élargissement de voie à partir d'une surface d'appui (100) du moyeu de roue et assurant une distance entre une surface d'enveloppe du goujon de roue et une paroi circonférentielle de l'ouverture pour vis de roue du disque d'élargissement de voie, et **en ce que**
les écrous à tige traversent les ouvertures de vis de roue de la jante, les écrous à tige pénétrant au moins partiellement dans les ouvertures de vis de roue du disque d'élargissement de voie dans la zone des ouvertures de vis de roue, et une douille étant enfilée sur chaque goujon.

12. Agencement selon la revendication 11, **caractérisé en ce que** la distance entre la surface d'enveloppe du goujon et la paroi périphérique de l'ouverture de vis de roue correspond à au moins une épaisseur de paroi de l'écrou à tige.

13. Agencement selon la revendication 11 ou 12, **caractérisé en ce que** la douille présente une épaisseur le long de l'axe longitudinal central du disque d'élargissement de voie qui est comprise entre 2 mm et 5 mm.
